# EUROPEAN PATENT APPLICATION

(11) **EP 2 874 425 A1**
(43) Date of publication of application: **20.05.2015**
(21) Application number: 12883898.4
(22) Date of filing: 29.08.2012
(51) Int. Cl.: H04W 24/00

(54) **METHOD, DEVICE AND SYSTEM FOR DETECTING INDOOR CELL LEAKAGE**

(71) Applicant: Huawei Technologies Co., Ltd., Longgang District Shenzhen, Guangdong 518129 (CN)
(72) Inventor: YUE, Jianjun, Shenzhen Guangdong 518129 (CN); LV, Guoyou, Shenzhen Guangdong 518129 (CN)
(74) Representative: Maiwald Patentanwalts GmbH
(86) International application number: PCT/CN2012/080727
(87) International publication number: WO 2014/032242

(57) **Abstract**

The present invention provides a method, an apparatus, and a system for detecting indoor cell leakage. The method comprises: acquiring measurement information reported by a mobile terminal, where the measurement information comprises a serving cell, a neighboring cell, and a downlink level of the neighboring cell when the mobile terminal performs communication; parsing the measurement information, and obtaining a downlink level of an indoor cell from the measurement information that the serving cell is an outdoor cell and the neighboring cell comprises the indoor cell; and determining, according to the downlink level of the indoor cell, whether leakage occurs in the indoor cell. In technical solutions in embodiments of the present invention, whether leakage occurs in an indoor cell can be detected by using measurement information reported by a mobile terminal, which features high detection efficiency and an accurate detection result.

## Description

### TECHNICAL FIELD

Embodiments of the present invention relate to communications technologies, and in particular, to a method, an apparatus, and a system for detecting indoor cell leakage.

### BACKGROUND

In a mobile communications system, indoor communications coverage, as an effective complement to outdoor communications coverage, can effectively meet a communication requirement on occasions such as a tall building, a supermarket, and a subway, and provides a high-quality communication service for a mobile user. A system for implementing indoor communications coverage is called an indoor distributed system, and a communications coverage area of each indoor base station in the indoor distributed system is called an indoor cell; and a system for implementing outdoor communications coverage is called an outdoor system, and a communications coverage area of each base station in the outdoor system is called an outdoor cell.

Because the indoor distributed system is arranged independently of an outdoor distributed system, in order to avoid interference of an indoor cell in the indoor distributed system caused to an outdoor cell in the outdoor distributed system, a leakage situation of the indoor cell needs to be detected so as to adjust distribution of indoor cells. Detection of leakage of the indoor cell is to detect an overlapping situation of communications coverage of the indoor cell and communications coverage of the outdoor cell. At present, a test instrument is usually used to detect the leakage of the indoor cell, and a signal measurement instrument is used to detect a downlink level of the indoor cell and a downlink level of the outdoor cell. By determining the detected downlink levels, whether the communications coverage of the indoor cell overlaps the communications coverage of the outdoor cell is determined, so as to determine whether leakage occurs in the indoor cell. When leakage occurs in a cell, the indoor distributed system may be adjusted to avoid the interference caused by the indoor cell to the outdoor cell.

However, in the prior art, when leakage detection for an indoor cell is performed, on-site measurement needs to be performed by using a test instrument, which causes that a measurement range is wide, and a measurement point is difficult to select, so that accuracy of a detection result is affected. In addition, a detection process is both time-consuming and energy-consuming, and detection efficiency is low.

### SUMMARY

Embodiments of the present invention provide a method, an apparatus and a system for detecting indoor cell leakage, which may be used to detect indoor cell leakage, so that detection efficiency is high and a detection result is accurate.

An embodiment of the present invention provides a method for detecting indoor cell leakage, including: acquiring measurement information reported by a mobile terminal, where the measurement information includes a serving cell, a neighboring cell, and a downlink level of the neighboring cell when the mobile terminal performs communication; parsing the measurement information, and obtaining a downlink level of an indoor cell from the measurement information that the serving cell is an outdoor cell and the neighboring cell includes the indoor cell; and determining, according to the downlink level of the indoor cell, whether leakage occurs in the indoor cell.

An embodiment of the present invention provides an apparatus for detecting indoor cell leakage, including: a measurement information acquiring module, configured to acquire measurement information reported by a mobile terminal, where the measurement information includes a serving cell, a neighboring cell, and a downlink level of the neighboring cell when the mobile terminal performs communication; a measurement information parsing module, configured to parse the measurement information acquired by the measurement information acquiring module, and obtain a downlink level of an indoor cell from the measurement information that the serving cell is an outdoor cell and the neighboring cell includes the indoor cell; and a leakage determining module, configured to determine, according to the downlink level of the indoor cell, whether leakage occurs in the indoor cell, where the downlink level of the indoor cell is obtained by the measurement information parsing module.

The present invention provides a method for detecting indoor cell leakage, including:
acquiring an indoor cell list and an outdoor cell list; and
parsing acquired measurement information reported by a mobile terminal, and obtaining a leakage situation of each indoor cell in the indoor cell list to each outdoor cell in the outdoor cell list, where
the parsing acquired measurement information reported by a mobile terminal, and obtaining a leakage situation of each indoor cell in the indoor cell list to each outdoor cell in the outdoor cell list includes:
   parsing the acquired measurement information reported by the mobile terminal, and obtaining a downlink level of one indoor cell in the indoor cell list from the measurement information that a serving cell is one outdoor cell in the outdoor cell list and a neighboring cell includes the one indoor cell, where the measurement information includes a serving cell, a neighboring cell, and a downlink level of the neighboring cell when the mobile terminal performs communication; and
   determining, according to the downlink level of the one indoor cell, whether leakage occurs in the indoor cell.

The present invention provides an apparatus for detecting indoor cell leakage, including:
a cell list acquiring module, configured to acquire an indoor cell list and an outdoor cell list; and
an indoor cell leakage detecting module, configured to parse acquired measurement information reported by a mobile terminal, and obtain a leakage situation of each indoor cell in the indoor cell list to each outdoor cell in the outdoor cell list, where the indoor cell list and the outdoor cell list are acquired by the cell list acquiring module;
where, further, the indoor cell leakage detecting module is specifically configured to parse the acquired measurement information reported by the mobile terminal, obtain a downlink level of one indoor cell from the measurement information that a serving cell is one outdoor cell in the outdoor cell list and a neighboring cell includes the one indoor cell in the indoor cell list, where the measurement information includes a serving cell, a neighboring cell, and a downlink level of the neighboring cell when the mobile terminal performs communication; and
determine, according to the downlink level of the one indoor cell, whether leakage occurs in the indoor cell.

The present invention provides a system for detecting indoor cell leakage, including the foregoing apparatus for detecting indoor cell leakage provided in the present invention.

According to the method, the apparatus, and the system for detecting indoor cell leakage provided in the embodiments of the present invention, whether leakage occurs in an indoor cell is determined by acquiring measurement information that includes a serving cell and a neighboring cell and is reported by a mobile terminal when the mobile terminal performs communication and according to a downlink level of an indoor cell, where the downlink level of the indoor cell is obtained from the measurement information that the serving cell is an outdoor cell and the neighboring cell is the indoor cell. Therefore, leakage detection of the indoor cell becomes more convenient, detection efficiency is high, and a detection result is accurate and reliable.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a method for detecting indoor cell leakage according to Embodiment 1 of the present invention;
FIG. 2 is a schematic flowchart of a method for detecting indoor cell leakage according to Embodiment 2 of the present invention;
FIG. 3 is a schematic flowchart of a method for detecting indoor cell leakage according to Embodiment 3 of the present invention;
FIG. 4 is a schematic flowchart of collecting statistics about a proportion that a downlink level of a neighboring cell that is an indoor cell is greater than preset level strength according to an embodiment of the present invention;
FIG. 5 is a schematic flowchart of a method for detecting indoor cell leakage according to Embodiment 4 of the present invention;
FIG. 6 is a schematic structural diagram of an apparatus for detecting indoor cell leakage according to Embodiment 5 of the present invention;
FIG. 7 is a schematic structural diagram of an apparatus for detecting indoor cell leakage according to Embodiment 6 of the present invention;
FIG. 8 is a schematic structural diagram of an apparatus for detecting indoor cell leakage according to Embodiment 7 of the present invention;
FIG. 9 is a schematic structural diagram of an apparatus for detecting indoor cell leakage according to Embodiment 8 of the present invention;
FIG. 10 is a schematic structural diagram of another apparatus for detecting indoor cell leakage according to Embodiment 8 of the present invention; and
FIG. 11 is a schematic structural diagram of a system for detecting indoor cell leakage according to Embodiment 9 of the present invention.

### DESCRIPTION OF EMBODIMENTS

To make the objectives, technical solutions, and advantages of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

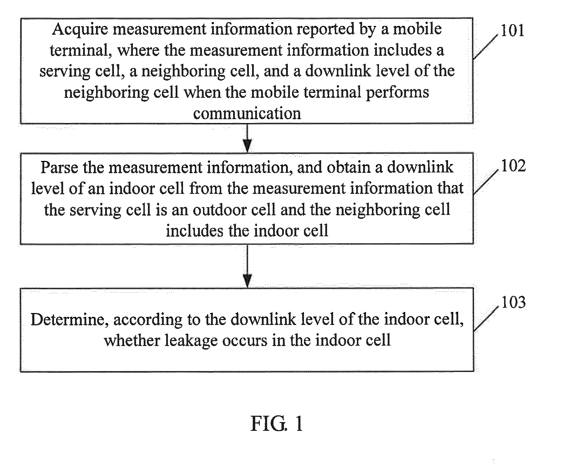

FIG. 1 is a schematic flowchart of a method for detecting indoor cell leakage according to Embodiment 1 of the present invention. A leakage situation of an indoor cell in a communications system may be detected in this embodiment of the present invention. Specifically, as shown in FIG. 1, the detection method in this embodiment includes the following steps:
Step 101: Acquire measurement information reported by a mobile terminal, where the measurement information includes a serving cell, a neighboring cell, and a downlink level of the neighboring cell when the mobile terminal performs communication.
Step 102: Parse the measurement information, and obtain a downlink level of the indoor cell from the measurement information that the serving cell is an outdoor cell and the neighboring cell includes the indoor cell.

The outdoor cell may be a cell type or may be a preset outdoor cell. Specifically, the outdoor cell may be configured according to a user requirement and an actual application need. For example, if the outdoor cell refers to a preset outdoor cell and the preset outdoor cell is an outdoor cell A, leakage detection that is to be performed is to detect a leakage situation of the indoor cell to the outdoor cell A; apparently, when the preset outdoor cells are the outdoor cell A and an outdoor cell B, leakage detection that is to be performed is to detect a leakage situation of the indoor cell to the outdoor cell A and the outdoor cell B. If the outdoor cell refers to a cell type, a cell type of the serving cell is limited to an outdoor cell, but the serving cell is not limited to one or more specific outdoor cells; in this case, leakage detection that is to be performed is to detect an overall leakage situation of the outdoor cell.

Step 103: Determine, according to the downlink level of the indoor cell, whether leakage occurs in the indoor cell.

It should be noted that the neighboring cell in the measurement information may include multiple indoor cells. Therefore, when the neighboring cell in the measurement information includes multiple indoor cells, leakage detection may be implemented for the multiple indoor cells at the same time. For detection of a leakage situation of another indoor cell, a detection process may be the same, and details are not described herein again.

In this embodiment, a leakage situation of an indoor cell in an indoor distributed system in a mobile communications network may be detected. Specifically, when a mobile terminal, for example, a mobile phone, performs communication, the mobile terminal may report measurement information in real time. The measurement information includes a serving cell and a neighboring cell. When the serving cell is an outdoor cell and the neighboring cell is an indoor cell, whether leakage occurs in the indoor cell may be determined according to a downlink level of the indoor cell. For example, whether leakage occurs in the indoor cell may be determined according to a value of the downlink level of the indoor cell.

Persons skilled in the art may understand that when the mobile terminal performs communication, a downlink level signal of a communications cell surrounding the mobile terminal needs to be detected, so as to determine which communications cell can serve as a serving cell and determine a neighboring cell of the serving cell. Generally speaking, a communications cell with a strong signal is used as a serving cell, that is, a cell used by the mobile terminal for communication, while a communications cell with a relatively weak signal is used as a neighboring cell. The communications cell, serving cell, and neighboring cell mentioned herein refer to an outdoor cell in an outdoor system or an indoor cell in an indoor distributed system in a mobile communications network.

In this embodiment, the foregoing steps may be performed by a base station controller (Base Station Controller, BSC), a radio network controller (Radio Network Controller, RNC), or a base station in a communications system, so as to detect whether leakage occurs in an indoor cell; or the foregoing steps may be performed by an operation support system (Operation Support System, OSS) in a mobile communications system, so as to detect whether leakage occurs in an indoor cell. The specific implementation may be in a software or hardware manner, which is not specially limited in this embodiment herein.

According to the method for detecting indoor cell leakage provided in this embodiment of the present invention, whether leakage occurs in an indoor cell is determined by acquiring measurement information obtained when the mobile terminal performs communication and according to a downlink level of an indoor cell, where the downlink level of the indoor cell is obtained from the measurement information that a serving cell is an outdoor cell and a neighboring cell is the indoor cell. Therefore, leakage detection of the indoor cell becomes more convenient, detection efficiency is high, and a detection result is accurate and reliable.

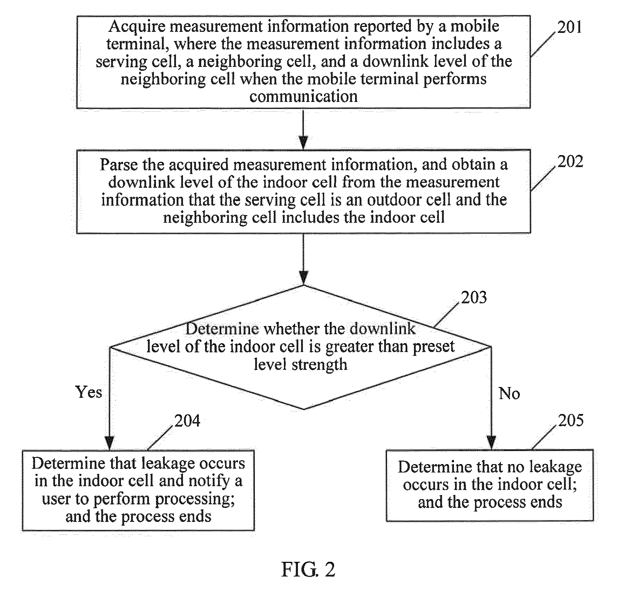

FIG. 2 is a schematic flowchart of a method for detecting indoor cell leakage according to Embodiment 2 of the present invention. Whether leakage occurs in an indoor cell may be determined in this embodiment based on a value of level strength of the indoor cell. Specifically, as shown in FIG. 2, the detection method in this embodiment may include the following steps:
Step 201: Acquire measurement information reported by a mobile terminal, where the measurement information includes a serving cell, a neighboring cell, and a downlink level of the neighboring cell when the mobile terminal performs communication.
Step 202: Parse the acquired measurement information, and obtain a downlink level of an indoor cell from the measurement information that the serving cell is an outdoor cell and the neighboring cell includes the indoor cell.

For related description of the outdoor cell, reference may be made to step 102.

Step 203: Determine whether the downlink level of the indoor cell is greater than preset level strength. If the downlink level of the indoor cell is greater than the preset level strength, perform step 204; if the downlink level of the indoor cell is not greater than the preset level strength, perform step 205.

Step 204: Determine that leakage occurs in the indoor cell and notify a user to perform processing; and the process ends.

Step 205: Determine that no leakage occurs in the indoor cell; and the process ends.

In the foregoing step 201 and step 202, the measurement information may be parsed after the measurement information reported by the mobile terminal is received and acquired. Step 203 is performed to determine whether leakage occurs in the indoor cell, only when it is determined that the serving cell in the measurement information is an outdoor cell and the neighboring cell includes the indoor cell; otherwise, the measurement information may be ignored, and new measurement information reported by the mobile terminal is received and acquired again, and then processed.

In the foregoing step 204, if it is determined that leakage occurs in the indoor cell, a user may be notified, for example, by using an SMS message or by using a display screen, so that the user may adjust arrangement of indoor cells to eliminate a leakage situation. A manner for notifying the user is not limited herein.

Persons skilled in the art may understand that the value of the foregoing preset level strength which is used to determine whether leakage occurs in the indoor cell may be set to an appropriate value according to an actual situation. A specific value may be set by experience or according to an actually measured standard value or according to communication requirements of different mobile communications networks. No special limitation is imposed herein.

According to the method for detecting indoor cell leakage provided in this embodiment of the present invention, when measurement information reported by a mobile terminal is received, the received measurement information is processed immediately, so as to obtain a downlink level of an indoor cell included in a neighboring cell of an outdoor cell, and whether leakage occurs in the indoor cell is determined according to obtained level strength of the indoor cell. In this way, efficient detection of indoor cell leakage can be implemented, leakage detection of the indoor cell also becomes more timely, and interference is reduced.

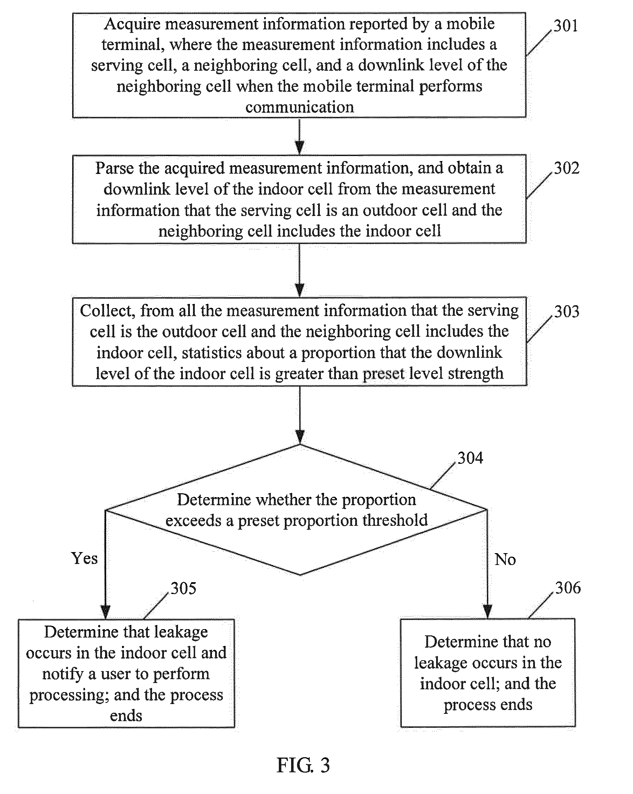

FIG. 3 is a schematic flowchart of a method for detecting indoor cell leakage according to Embodiment 3 of the present invention. A difference from the technical solution in the foregoing embodiment shown in FIG. 2 is that, when it is detected whether leakage occurs in an indoor cell in this embodiment, measurement information received within a preset time or a preset quantity of measurement information may be processed successively, and whether leakage occurs in the indoor cell is determined by collecting statistics about multiple downlink levels of the indoor cell. Specifically, as shown in FIG. 3, the detection method in this embodiment may include the following steps:
Step 301: Acquire measurement information reported by a mobile terminal, where the measurement information includes a serving cell, a neighboring cell, and a downlink level of the neighboring cell when the mobile terminal performs communication.
Step 302: Parse the acquired measurement information, and obtain a downlink level of an indoor cell from the measurement information that the serving cell is an outdoor cell and the neighboring cell includes the indoor cell.

For related description of the outdoor cell, reference may be made to step 102.

Step 303: Collect, from all the measurement information that the serving cell is the outdoor cell and the neighboring cell includes the indoor cell, statistics about a proportion that the downlink level of the indoor cell is greater than preset level strength.

Step 304: Determine whether the proportion exceeds a preset proportion threshold. If yes, perform step 305; otherwise, perform step 306.

Step 305: Determine that leakage occurs in the indoor cell and notify a user to perform processing; and the process ends.

Step 306: Determine that no leakage occurs in the indoor cell; and the process ends.

It should be noted that the indoor cell in which leakage detection is performed may be configured according to a user requirement, and both the preset level strength and the preset proportion threshold for leakage detection may be set to an appropriate value according to an actual situation. A specific value may be set by experience or according to an actually measured standard value or according to communication requirements of different mobile communications networks. No special limitation is imposed herein.

In the foregoing steps 301 to 303, collecting statistics about the proportion that the downlink level of the indoor cell is greater than the preset level strength may be specifically implemented in the following two manners:
Manner 1: Parsing processing is performed on the received measurement information, so as to obtain the downlink level of the indoor cell, that is, step 301 and step 302 are performed. When a set detection timer meets a timing cycle or the quantity of parsing-processed measurement information meets the preset quantity, statistics about the proportion that the downlink level of the indoor cell is greater than the preset level strength is collected according to the obtained downlink level of the indoor cell, that is, step 303 is performed.
Manner 2: The received measurement information is stored, and when a set timer meets a timing cycle or the quantity of stored measurement information meets the preset quantity, step 301 and step 302 are performed to parse the stored measurement information, so as to obtain the downlink level of the indoor cell; then step 303 is performed to collect statistics about the proportion that the downlink level of the indoor cell is greater than the preset level strength and to determine whether leakage occurs in the indoor cell.

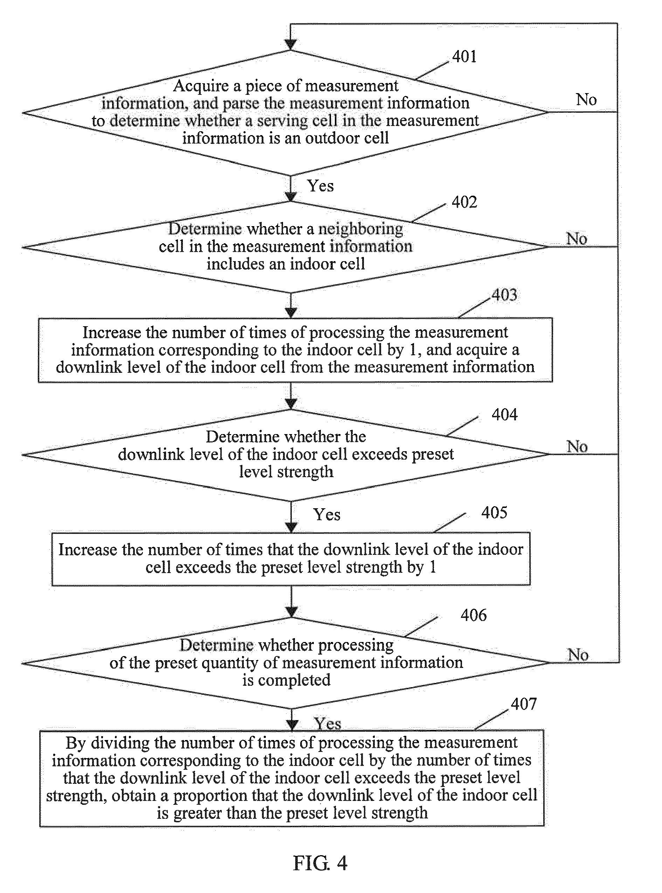

In a statistics collecting process, only the measurement information that the serving cell is an outdoor cell and the neighboring cell includes the indoor cell needs to be processed and counted. Specifically, as shown in FIG. 4, Manner 2 is used as an example. When the quantity of stored measurement information meets the preset quantity, a preset quantity of measurement information is parsed, so as to collect statistics about the proportion that the downlink level of the indoor cell is greater than the preset level strength, which is specifically as follows:
Step 401: Acquire a piece of measurement information from the preset quantity of stored measurement information, and parse the measurement information to determine whether the serving cell in the measurement information is an outdoor cell. If yes, perform step 402; otherwise, acquire a next piece of measurement information and perform step 401 again.
Step 402: Determine whether the neighboring cell in the measurement information includes the indoor cell. If yes, perform step 403; otherwise, perform step 401 again.
Step 403: Increase the number of times of processing the measurement information corresponding to the indoor cell by 1, and acquire the downlink level of the indoor cell from the measurement information.
Step 404: Determine whether the downlink level of the indoor cell exceeds preset level strength. If yes, perform step 405; otherwise, perform step 401 again.
Step 405: Increase the number of times that the downlink level of the indoor cell exceeds the preset level strength by 1.
Step 406: Determine whether processing of the preset quantity of measurement information is completed. If yes, perform step 407; otherwise, perform step 401.
Step 407: By dividing the number of times of processing the measurement information corresponding to the indoor cell by the number of times that the downlink level of the indoor cell exceeds the preset level strength, obtain the proportion of the downlink level that the indoor cell is greater than the preset level strength.

In the foregoing step 403, an initial value of the number of times of processing the measurement information corresponding to the indoor cell is set to 0. In step 405, an initial value of the number of times that the downlink level of the indoor cell exceeds the preset level strength is also set to 0. It can be seen that by cyclically processing the preset quantity of stored measurement information, the proportion that the downlink level of the indoor cell exceeds the preset level strength may be obtained by statistics.

In this embodiment, by analyzing measurement information, a proportion that a downlink level of an indoor cell exceeds preset level strength may be obtained from the measurement information that a serving cell is an outdoor cell and a neighboring cell includes the indoor cell, and the proportion may be used as a basis for determining whether leakage occurs in the indoor cell, which may make leakage detection of the indoor cell more accurate and reliable.

Persons skilled in the art may understand that a value of a downlink level of an indoor cell in reported measurement information varies with positions of a mobile terminal in the indoor cell and an outdoor cell. Therefore, accuracy and reliability of indoor cell leakage detection may be effectively improved by collecting statistics about a downlink level of an indoor cell in stored measurement information.

Persons skilled in the art may understand that the embodiment shown in FIG. 3 in the foregoing shows detection of a leakage situation of one indoor cell to one or more outdoor cells. For detection of a leakage situation of another indoor cell, a detection process may be the same, and details are not described herein again.

In the foregoing embodiments of the present invention, the measurement information may be specifically a measurement result (Measurement Result, MR) reported by a mobile terminal such as a conventional mobile phone when the mobile terminal performs communication, and the MR reported by the mobile terminal may be stored in a form of one or more MR files, where the MR is measurement information that is reported through a signal path every 480ms according to a mobile communication standard when the mobile terminal performs communication, and the MR includes information such as a serving cell, a neighboring cell, and a downlink level of the serving cell and a downlink level of the neighboring cell when the mobile terminal performs communication, where the MR may be used to evaluate and optimize a network.

To better understand the embodiments of the present invention, the method for detecting indoor cell leakage is described in the following by using the MR as measurement information.

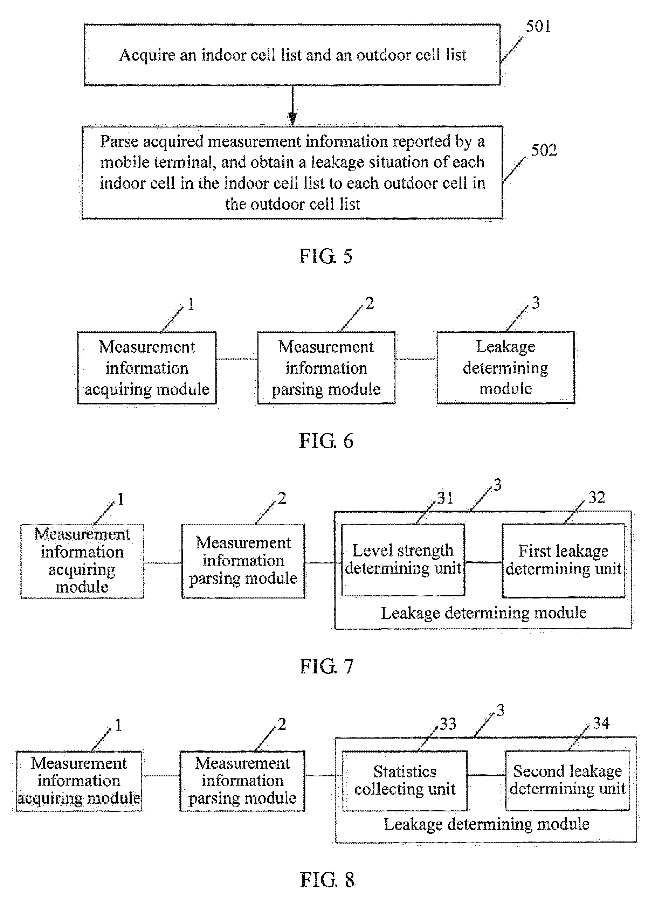

FIG. 5 is a schematic flowchart of a method for detecting indoor cell leakage according to Embodiment 4 of the present invention. A leakage situation of each indoor cell to each outdoor cell in a mobile communications network may be detected, and a leakage indoor cell list is output in this embodiment. Specifically, as shown in FIG. 5, this embodiment may include the following steps:
Step 501: Acquire an indoor cell list and an outdoor cell list.
Step 502: Parse acquired measurement information reported by a mobile terminal, and obtain a leakage situation of each indoor cell in the indoor cell list to each outdoor cell in the outdoor cell list.

In this embodiment, after the obtaining a leakage situation of each indoor cell in the indoor cell list to each outdoor cell in the outdoor cell list in step 502, the method may further include: outputting, according to the obtained leakage situation of each indoor cell in the indoor cell list to each outdoor cell in the outdoor cell list, information about an indoor cell in which leakage occurs. The outputting information about an indoor cell in which leakage occurs may be implemented in a form of a list.

In this embodiment, the measurement information reported by the mobile terminal may be specifically an MR. In this embodiment, MRs reported by all mobile terminals in a mobile communications network may be parsed, so as to detect a leakage situation of all indoor cells in the mobile communications network, and a leakage cell list may be output, so that network maintenance personnel adjust a cell in which leakage occurs.

Specifically, in the foregoing step 501, the indoor cell list and the outdoor cell list can be read from data configured by a network. The indoor cell list includes a serial number of an indoor cell, a name of the indoor cell, a location area code (Location Area Code, LAC) of the indoor cell, and a cell identity (Cell Identify, CI) value of the indoor cell. Likewise, the outdoor cell list includes a serial number of an outdoor cell, a name of the outdoor cell, a LAC of the outdoor cell, and a CI value of the outdoor cell.

When the foregoing step 502 is performed, specifically, an MR stored in an MR file may be cyclically processed, so as to detect and obtain a leakage situation of each indoor cell in the indoor cell list to each outdoor cell in the outdoor cell list, and to output a leakage cell list.

In the foregoing step 502, specifically, the leakage situation of each indoor cell in the indoor cell list to each outdoor cell in the outdoor cell list may be obtained by using the technical solution shown in FIG. 1, FIG. 2, or FIG 3, which may specifically include: parsing the acquired measurement information reported by the mobile terminal, and obtaining a downlink level of one indoor cell from the measurement information that a serving cell is one outdoor cell in the outdoor cell list and a neighboring cell includes the one indoor cell in the indoor cell list; and determining, according to the downlink level of the one indoor cell, whether leakage occurs in the one indoor cell. Preferably, in this embodiment, the detecting and obtaining the foregoing leakage situation of each indoor cell in the indoor cell list to each outdoor cell in the outdoor cell list may be implemented by using the method for detecting indoor cell leakage provided in the embodiment shown in FIG. 3. That is, the indoor cell for leakage detection and the outdoor cell used as a neighboring cell in the embodiment shown in FIG. 3 are configured according to information about the indoor cell in the foregoing indoor cell list and information about the outdoor cell. Details are not described herein again.

In this embodiment, by cyclically processing an MR stored in an MR file, a leakage situation of each indoor cell is obtained, and detection for multiple indoor cells at the same time is implemented, so that a leakage situation of each indoor cell in a whole mobile communications network may be determined, thereby improving a detection effect of indoor cell leakage. In addition, a cells in which leakage occurs may be output in a form of a list, which makes information be recorded more comprehensively and easy to view.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed; and the foregoing storage medium includes: any medium that can store program code, such as a ROM, a RAM, a magnetic disk, or an optical disc.

FIG. 6 is a schematic structural diagram of an apparatus for detecting indoor cell leakage according to Embodiment 5 of the present invention. The apparatus in this embodiment may be specifically a BSC, an RNC, a base station, or an OSS in a communications system, and may perform detection on a leakage situation of an indoor cell in the communications system. Specifically, as shown in FIG. 6, the detection apparatus in this embodiment includes a measurement information acquiring module 1, a measurement information parsing module 2, and a leakage determining module 3.

The measurement information acquiring module 1 is configured to acquire measurement information reported by a mobile terminal, where the measurement information includes a serving cell, a neighboring cell, and a downlink level of the neighboring cell when the mobile terminal performs communication.

The measurement information parsing module 2 is configured to parse the measurement information acquired by the measurement information acquiring module 1, and obtain a downlink level of an indoor cell from the measurement information that the serving cell is an outdoor cell and the neighboring cell includes the indoor cell.

The leakage determining module 3 is configured to determine, according to the downlink level of the indoor cell, whether leakage occurs in the indoor cell, where the downlink level of the indoor cell is obtained by the measurement information parsing module 2.

The detection apparatus in this embodiment may perform detection on a leakage situation of an indoor cell in a communications network. For a specific implementation process, reference may be made to the foregoing description of the method in Embodiment 1 of the present invention, and details are not described herein again.

Persons skilled in the art may understand that when the apparatus in this embodiment is a base station controller in a communications system, in addition to functions of the foregoing modules, the apparatus further has a function that the base station controller has. Specifically, the apparatus may integrate the foregoing modules based on an existing base station controller; similarly, when the apparatus in this embodiment is an OSS, the apparatus also has a function that the OSS has.

FIG. 7 is a schematic structural diagram of an apparatus for detecting indoor cell leakage according to Embodiment 6 of the present invention. Based on the foregoing embodiment shown in FIG. 6, as shown in FIG. 7, the foregoing leakage determining module 3 may specifically include a level strength determining unit 31 and a first leakage determining unit 32.

The level strength determining unit 31 is configured to determine whether the downlink level of the indoor cell is greater than preset level strength, where the downlink level of the indoor cell is obtained by the measurement information parsing module 2.

The first leakage determining unit 32 is configured to, when the level strength determining unit 31 determines that the downlink level of the indoor cell is greater than the preset level strength, determine that leakage occurs in the indoor cell.

The detection apparatus in this embodiment may determine, according to a value of a downlink level of an indoor cell in measurement information, whether leakage occurs in the indoor cell. For a specific implementation process, reference may be made to the foregoing description of the method in Embodiment 2 of the present invention, and details are not described herein again.

FIG. 8 is a schematic structural diagram of an apparatus for detecting indoor cell leakage according to Embodiment 7 of the present invention. A difference from the technical solution in the embodiment shown in FIG. 7 is that the leakage determining module 3 in this embodiment may specifically include a statistics collecting unit 33 and a second leakage determining unit 34.

The statistics collecting unit 33 is configured to collect, from all the measurement information that the serving cell is the outdoor cell and the neighboring cell includes the indoor cell, statistics about a proportion that the downlink level of the indoor cell is greater than preset level strength, where all the measurement information is obtained by the measurement information parsing module 2.

The second leakage determining unit 34 is configured to determine whether the proportion obtained by means of statistics collected by the statistics collecting unit 33 exceeds a preset proportion threshold, and if yes, determine that leakage occurs in the indoor cell.

Based on statistics about values of all downlink levels of an indoor cell in measurement information, the detection apparatus in this embodiment may determine whether leakage occurs in the indoor cell. For a specific implementation process, reference may be made to the foregoing description of the method in Embodiment 3 or 4 of the present invention, and details are not described herein again.

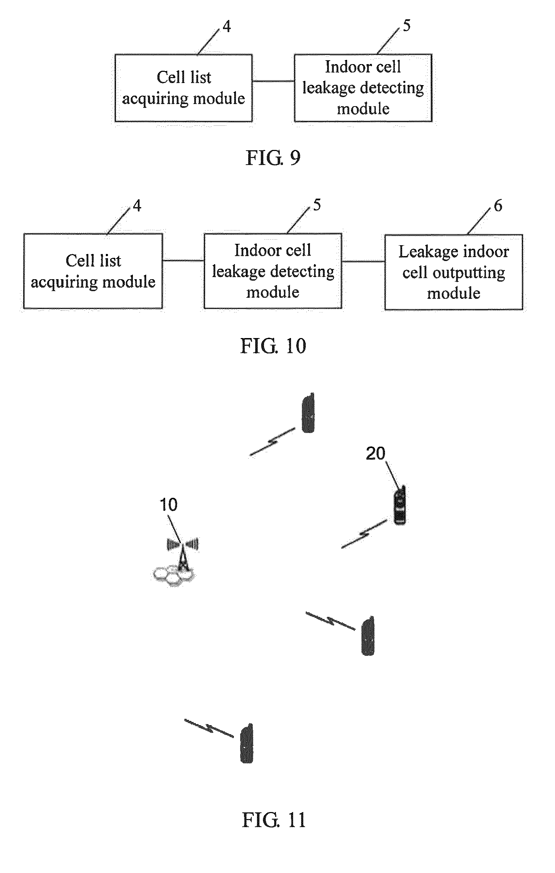

FIG. 9 is a schematic structural diagram of an apparatus for detecting indoor cell leakage according to Embodiment 8 of the present invention. As shown in FIG. 9, the detection apparatus in this embodiment includes a cell list acquiring module 4 and an indoor cell leakage detecting module 5.

The cell list acquiring module 4 is configured to acquire an indoor cell list and an outdoor cell list.

The indoor cell leakage detecting module 5 is configured to parse acquired measurement information reported by a mobile terminal, and obtain a leakage situation of each indoor cell in the indoor cell list to each outdoor cell in the outdoor cell list, where the indoor cell list and the outdoor cell list are acquired by the cell list acquiring module 4.

Further, the indoor cell leakage detecting module 5 may be specifically configured to parse the acquired measurement information reported by the mobile terminal, obtain a downlink level of one indoor cell from the measurement information that a serving cell is one outdoor cell in the outdoor cell list and a neighboring cell includes the one indoor cell in the indoor cell list, where the measurement information includes a serving cell, a neighboring cell, and a downlink level of the neighboring cell when the mobile terminal performs communication; and determine, according to the downlink level of the indoor cell, whether leakage occurs in the indoor cell.

Optionally, as shown in FIG. 10, the apparatus for detecting indoor cell leakage further includes a leakage indoor cell outputting module 6, configured to output, according to the leakage situation of each indoor cell in the indoor cell list to each outdoor cell in the outdoor cell list, information about an indoor cell in which leakage occurs, where the leakage situation is obtained by the indoor cell leakage detecting module 5.

The outputting information about an indoor cell in which leakage occurs may be implemented in a form of a list.

FIG. 11 is a schematic structural diagram of a system for detecting indoor cell leakage according to Embodiment 9 of the present invention. As shown in FIG. 11, the detection system in this embodiment of the present invention may include the apparatus for detecting indoor cell leakage provided in the foregoing embodiments of the present invention, where the detection apparatus may be integrated on a BSC or an RNC or a base station 10. The apparatus for detecting indoor cell leakage may detect a leakage situation of an indoor cell in an indoor distributed system by acquiring and parsing measurement information reported by a mobile terminal 20. For a specific implementation process, reference may be made to the foregoing descriptions in the apparatus embodiments of the present invention, and details are not described herein again.

In addition, in the detection system in this embodiment of the present invention, the apparatus for detecting indoor cell leakage may also be integrated on an OSS. The measurement information reported by the mobile terminal is reported to the OSS finally, and the detection apparatus integrated on the OSS may detect a leakage situation of an indoor cell according to the reported measurement information.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all technical features thereof; however these modifications or replacements do not make the essence of corresponding technical solutions depart from the spirit and scope of the technical solutions in the embodiments of the present invention.

## Claims

1. A method for detecting indoor cell leakage, **characterized by** comprising:
acquiring measurement information reported by a mobile terminal, wherein the measurement information comprises a serving cell, a neighboring cell, and a downlink level of the neighboring cell when the mobile terminal performs communication;
parsing the measurement information, and obtaining a downlink level of an indoor cell from the measurement information that the serving cell is an outdoor cell and the neighboring cell comprises the indoor cell; and
determining, according to the downlink level of the indoor cell, whether leakage occurs in the indoor cell.

2. The method for detecting indoor cell leakage according to claim 1, wherein the determining, according to the downlink level of the indoor cell, whether leakage occurs in the indoor cell comprises:
determining whether the downlink level of the indoor cell is greater than preset level strength, and when the downlink level of the indoor cell is greater than the preset level strength, determining that leakage occurs in the indoor cell.

3. The method for detecting indoor cell leakage according to claim 1, wherein the determining, according to the downlink level of the indoor cell, whether leakage occurs in the indoor cell comprises:
collecting, from all the measurement information that the serving cell is the outdoor cell and the neighboring cell comprises the indoor cell, statistics about a proportion that the downlink level of the indoor cell is greater than preset level strength; and
determining whether the proportion exceeds a preset proportion threshold, and when the proportion exceeds the preset proportion threshold, determining that leakage occurs in the indoor cell.

4. The method for detecting indoor cell leakage according to any one of claims 1 to 3, wherein the outdoor cell refers to a cell type or a preset outdoor cell.

5. A method for detecting indoor cell leakage, **characterized by** comprising:
acquiring an indoor cell list and an outdoor cell list; and
parsing acquired measurement information reported by a mobile terminal, and obtaining a leakage situation of each indoor cell in the indoor cell list to each outdoor cell in the outdoor cell list, wherein
the parsing acquired measurement information reported by a mobile terminal, and obtaining a leakage situation of each indoor cell in the indoor cell list to each outdoor cell in the outdoor cell list comprises:
parsing the acquired measurement information reported by the mobile terminal, and obtaining a downlink level of one indoor cell from the measurement information that a serving cell is one outdoor cell in the outdoor cell list and a neighboring cell comprises the one indoor cell in the indoor cell list, wherein the measurement information comprises a serving cell, a neighboring cell, and a downlink level of the neighboring cell when the mobile terminal performs communication; and
determining, according to the downlink level of the one indoor cell, whether leakage occurs in the one indoor cell.

6. The method for detecting indoor cell leakage according to claim 5, wherein the method further comprises:
outputting, according to the obtained leakage situation of each indoor cell in the indoor cell list to each outdoor cell in the outdoor cell list, information about an indoor cell in which leakage occurs.

7. An apparatus for detecting indoor cell leakage, **characterized by** comprising:
a measurement information acquiring module, configured to acquire measurement information reported by a mobile terminal, wherein the measurement information comprises a serving cell, a neighboring cell, and a downlink level of the neighboring cell when the mobile terminal performs communication;
a measurement information parsing module, configured to parse the measurement information acquired by the measurement information acquiring module, and obtain a downlink level of an indoor cell from the measurement information that the serving cell is an outdoor cell and the neighboring cell comprises the indoor cell; and
a leakage determining module, configured to determine, according to the downlink level of the indoor cell, whether leakage occurs in the indoor cell, wherein the downlink level of the indoor cell is obtained by the measurement information parsing module.

8. The apparatus for detecting indoor cell leakage according to claim 7, wherein the leakage determining module further comprises:
a level strength determining unit, configured to determine whether the downlink level of the indoor cell is greater than preset level strength, wherein the downlink level of the indoor cell is obtained by the measurement information parsing module; and
a first leakage determining unit, configured to, when the level strength determining unit determines that the downlink level of the indoor cell is greater than the preset level strength, determine that leakage occurs in the indoor cell.

9. The apparatus for detecting indoor cell leakage according to claim 7, wherein the leakage determining module comprises:
a statistics collecting unit, configured to collect, from all the measurement information that the serving cell is the outdoor cell and the neighboring cell comprises the indoor cell, statistics about a proportion that the downlink level of the indoor cell is greater than preset level strength, wherein all the measurement information is obtained by the measurement information parsing module; and
a second leakage determining unit, configured to determine whether the proportion obtained by means of statistics collected by the statistics collecting unit exceeds a preset proportion threshold, and when the proportion exceeds the preset proportion threshold, determine that leakage occurs in the indoor cell.

10. An apparatus for detecting indoor cell leakage, **characterized by** comprising:
a cell list acquiring module, configured to acquire an indoor cell list and an outdoor cell list; and
an indoor cell leakage detecting module, configured to parse acquired measurement information reported by a mobile terminal, and obtain a leakage situation of each indoor cell in the indoor cell list to each outdoor cell in the outdoor cell list, wherein the indoor cell list and the outdoor cell list are acquired by the cell list acquiring module;
wherein, further, the indoor cell leakage detecting module is specifically configured to parse the acquired measurement information reported by the mobile terminal, obtain a downlink level of one indoor cell from the measurement information that a serving cell is one outdoor cell in the outdoor cell list and a neighboring cell comprises the one indoor cell in the indoor cell list, wherein the measurement information comprises a serving cell, a neighboring cell, and a downlink level of the neighboring cell when the mobile terminal performs communication; and determine, according to the downlink level of the indoor cell, whether leakage occurs in the one indoor cell.

11. The apparatus for detecting indoor cell leakage according to claim 10, wherein the apparatus further comprises: a leakage indoor cell outputting module, configured to output, according to the leakage situation of each indoor cell in the indoor cell list to each outdoor cell in the outdoor cell list, information about an indoor cell in which leakage occurs, wherein the leakage situation is obtained by the indoor cell leakage detecting module.

12. A system for detecting indoor cell leakage, **characterized by** comprising the apparatus for detecting indoor cell leakage according to any one of claims 7 to 11.
